# EUROPEAN PATENT SPECIFICATION

(11) **EP 3 914 871 B1**
(45) Date of publication and mention of the grant of the patent: **17.04.2024**
(21) Application number: 20708309.8
(22) Date of filing: 23.01.2020
(51) Int. Cl.: F26B 3/30, F26B 25/22, B05D 3/02, B05D 3/06

(54) **SYSTEM AND METHOD FOR CONTROLLING A CURING PROCESS**
SYSTEM UND VERFAHREN ZUR STEUERUNG EINES AUSHÄRTUNGSPROZESSES
SYSTÈME ET MÉTHODE DE CONTRÔLE D'UN PROCÈS DE DURCISSEMENT

(30) Priority: 23.01.2019 US 201962796062 P
(43) Date of publication of application: 01.12.2021
(73) Proprietor: Carlisle Fluid Technologies, Inc., Scottsdale, AZ 85254 (US)
(72) Inventor: VARNES, Joseph Dominic, Toledo, Ohio 43611 (US)
(74) Representative: Gill Jennings & Every LLP
(86) International application number: PCT/US2020/014827
(87) International publication number: WO 2020/154527

(56) References cited:
- EP-A2- 1 874 095
- EP-A2- 1 970 696
- WO-A1-2010/096896
- WO-A2-2009/047804
- CN-A- 107 625 397
- US-A1- 2004 136 700
- US-A1- 2007 144 653
- US-A1- 2009 159 779
- US-A1- 2014 098 142
- US-B1- 6 394 796
- US-B1- 10 111 337

## Description

### TECHNICAL FIELD

The subject matter disclosed relates to curing, and more particularly, to curing control.

### BACKGROUND

In curing, such as ultraviolet (UV) curing or oven curing, hot air convection or long wavelength infrared heating systems apply energy to the surface molecules of a coating with little or no radiation penetration. The energy is transferred inward by conduction principles to cure, for example, paint. Curing typically uses a profile that details time versus temperature for the curing process. Different profiles may be used for different types of paint, size of object to be cured, and so on. It would be beneficial to improve curing control of curing systems.

EP1874095A2 discloses a curing system provided with a rotatable arm having a movable joint, an infrared lamp coupled to the rotatable arm, and an electrical cable extending through the rotatable arm and the movable joint. The curing system includes a control system to control aspects of the curing system.

### BRIEF DESCRIPTION

Certain aspects commensurate in scope with the claimed invention are summarized below. The invention may encompass a variety of forms in various embodiments.

In a first aspect, a curing system is provided. The curing system includes a display comprising a touchscreen, a first radiation emitter lamp, and a control system. The control system is operatively coupled the first radiation emitter lamp. The control system includes a processor configured to present, on the display, a first bake cycle, the bake cycle comprising a curve having at least two points. The processor is further configured to receive, via the touchscreen, user input to adjust the at least two points by moving the points within a graph. The processor is additionally configured to emit radiation via the first radiation emitter lamp by following the bake cycle.

In a second aspect, a method for controlling a curing system is provided. The method includes presenting, on a display included in a curing system, a first bake cycle, the bake cycle comprising a curve having at least two points. The method further includes receiving, via a touchscreen of the display, user input to adjust the at least two points by moving the points within a graph. The method additionally includes emitting radiation via a first radiation emitter lamp included in the curing system by following the bake cycle.

In a third aspect, a tangible, non-transitory, computer-readable medium include instructions that when executed by a processor comprised in a curing system cause the processor to present, on a display including in a curing system, a first bake cycle, the bake cycle comprising a curve having at least two points. The instructions when executed by the processor further cause the processor to receive, via a touchscreen of the display, user input to adjust the at least two points by moving the points within a graph. The instructions when executed by the processor additionally cause the processor to emit radiation via a first radiation emitter lamp included in the curing system by following the bake cycle.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is diagram of an embodiment of a curing system, such as a curing system that includes ultraviolet (UV) curing via infrared emitters;
FIG. 2 is diagram of an embodiment of a bake cycle that may be followed by the curing system of FIG. 1 to cure an object;
FIG. 3 is a screenshot of an embodiment of a graphical user interface (GUI) suitable for customizing or for creating a bake cycle; and
FIG. 4 is a flowchart of an embodiment of a process for customizing an existing bake cycle or for creating a bake cycle, and then for executing the bake cycle in the curing system of FIG. 1.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure are directed to systems and methods that may improve curing of certain surfaces, e.g., painted surfaces, via improved temperature profiles. In certain embodiments, users may enter a custom profile, for example via a touchscreen, which may improve a curing cycle. For example, curing machines, such as an Autocure^{™} infrared heaters available from Carlisle Fluid Technologies, of Scottsdale, Arizona, U.S.A., may provide for infrared radiation suitable for heating a surface, such as a painted surface. The techniques described in more detail below may improve the curing process by enabling a visual display of a customizable temperature cycle. That is, the visual display may be used both to display a temperature cycle as well as to manually customize the temperature cycle based on the surface coating being cured, size of the cured objects, type of coating, and so on. By providing for a customizable temperature cycle, the techniques described herein may improve curing of a surface by customizing the delivery of curing radiation.

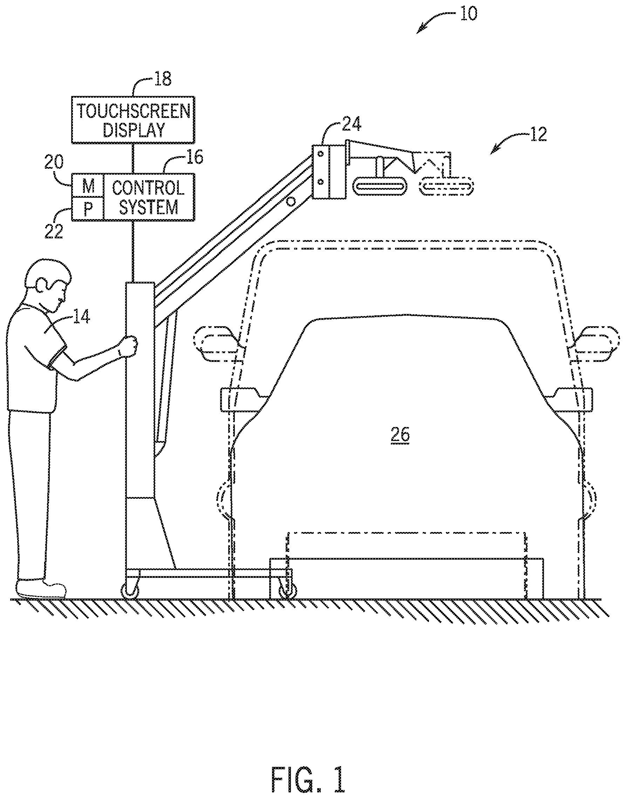

It may be useful to describe a system that may apply the curing techniques described herein. Accordingly and turning now to FIG. 1, the figure is a block diagram illustrating an embodiment of a curing system 10 that may include one or more infrared emitters 12. The curing system 10 may be suitable for curing a variety of surfaces and materials, including automotive applications, such as spot repairs. In use, a user 14 may interact with a control system 16 via a touchscreen display 18.

The control system 16 may include an industrial controller, and thus include a memory 20 and a processor 22. The processor 22 may include multiple microprocessors, one or more "general-purpose" microprocessors, one or more special-purpose microprocessors, one or more application specific integrated circuits (ASICS), and/or one or more reduced instruction set (RISC) processors, or some combination thereof. The memory 20 may include a volatile memory, such as random access memory (RAM), and/or a nonvolatile memory, such as ROM, a hard drive, a memory card, a memory stick (e.g., USB stick) and so on. The memory 20 may include computer programs or instructions executable by the processor 22 and suitable for controlling the curing system 10. The memory 20 may further include computer programs or instructions executable by the processor 22 and suitable for creating custom temperature profiles for the curing system 10.

During operations, the user may adjust and reposition the infrared emitters 12 to a desired "spot" and then begin a "bake" cycle. That is, certain surface material and coating combinations may show improved curing when the infrared emitters 12 are disposed at desired distances. Accordingly, the depicted curing system 10 includes a repositionable arm 24 mechanically coupled to the emitters 12 that enables the user to position the emitters 12 at various locations and distances over a curing object, such as a vehicle(s) 26. The bake cycle may then be initiated, and upon completion of the bake cycle, the surface may now be in a cured state.

The techniques described herein may provide for a customization of the bake cycle, for example, by visually presenting the bake cycle in a display, such as the touchscreen display 18. The user 14 may then take into account various factors, as further described below, and modify the bake cycle. Once the bake cycle is modified, the user 14 may then run the customized bake cycle, resulting in an improved curing.

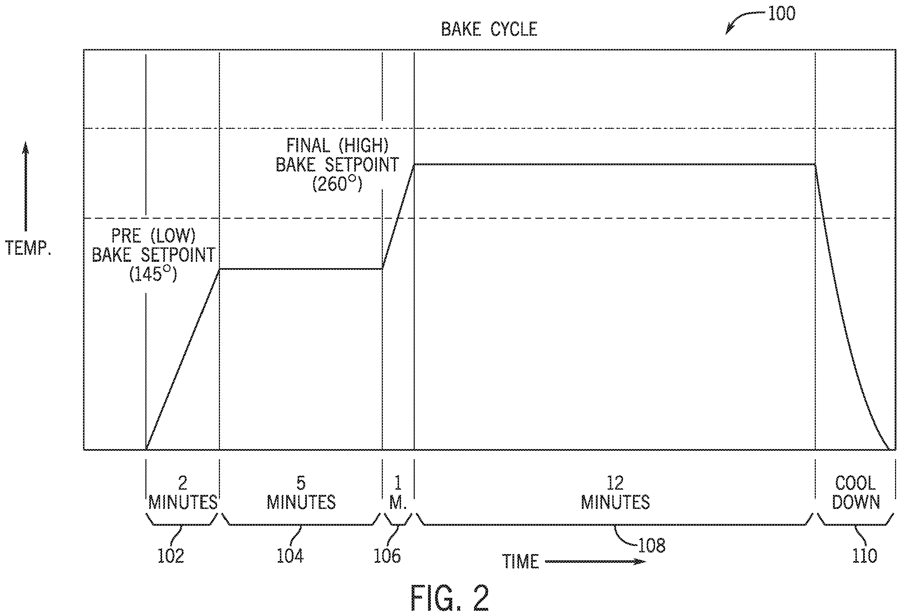

It may be useful to describe a bake cycle. Accordingly and turning now to FIG. 2, the figure is a diagram of an embodiment of a bake cycle 100 (e.g., bake cycle to be used by the curing system 10 of FIG. 1) that may provide for a standard "bake" for objects, such as the vehicle(s) 26. The diagram includes an X-axis having a time and a Y-axis having a temperature. It is to be noted that the bake cycle 100 shown in the figure is for example only, and that other bake cycles 100 may include different slopes and/or sections.

In the depicted embodiment, the bake cycle 100 is a two-ramp bake cycle. That is, a first ramping portion 102 may ramp up the temperature by increasing the infrared radiation radiated via the infrared emitters 12 for a certain time period. Once a first temperature is reached, the bake cycle may then plateau during a portion 104 of time. This pre-bake plateau portion 104 may enable certain chemical reactions to occur that may then aid in a final baking.

The pre-bake plateau portion 104 may then be followed by a second ramping portion 106. The second ramping portion 106 may increase bake temperatures to a final bake setpoint. The bake cycle 100 may then include a final bake portion 108 at a higher temperature than the first bake portion 104. The final bake portion 108 may cure the desired surface coating, e.g., paint, into a final coated surface. In some embodiments, a cool down period 110 may then lower the temperature from the final bake setpoint down to ambient temperature. By providing for the baking cycle 100, a surface coating such as paint may be cured to provide for a protective surface suitable for enhancing a look and/or protection of the vehicle(s) 26.

In certain embodiments, the bake cycle 100 ay be provided as a default bake cycle. In other embodiments, multiple bake cycles 100 may be stored in the memory 20 and retrieved during operations of the curing system 100. For example, baking cycles 100 for different surfaces such as metals, plastics, and other substrates, may be stored and used in the memory 20. It may be desirable to adjust or otherwise customize the bake cycle 100. Accordingly, the techniques described herein provide for the use of baking cycles that may be customized from the baking cycle 100 or crated from scratch.

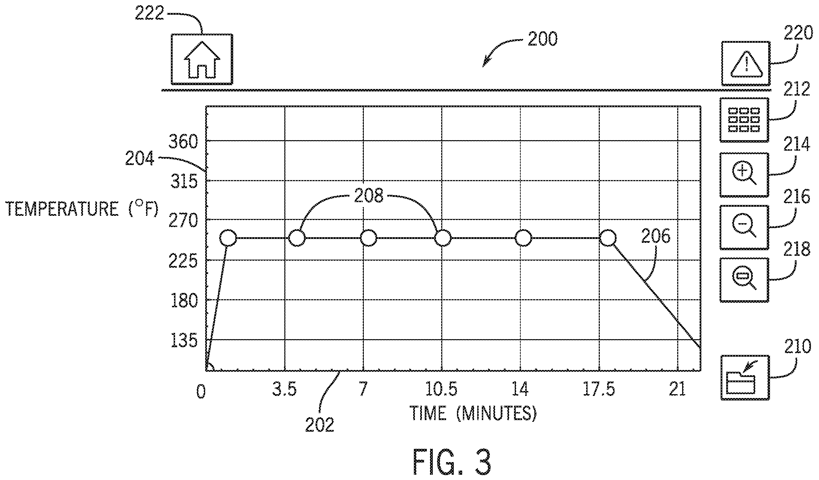

FIG. 3 is a screenshot illustrating an embodiment of a graphical user interface (GUI) 200 suitable for customizing and/or creating baking cycles. The GUI 200 may be implemented via computer code or instructions stored in the memory 20 and executed via the processor(s) 22. The GUI 200 may then be displayed in the touchscreen display 18.

In the illustrated embodiment, the GUI 200 includes an X-axis 202 having time measurements and a Y-axis 204 having temperature measurements. A curve 206 may then be used to define the desired bake cycle. In the depicted example the curve 206 may be defined by using two or more points 208. In certain embodiments, the user 14 may "press and hold" on an area of the touchscreen display 18 that does not have an existing point, and a new point 208 may then be created. The curve 206 may then be automatically redrawn to include the new point 208. For example, if the new point 208 lies between two existing points, e.g. left and right existing points, the new curve 206 may include two new segments, a first segment connecting the left point to the new point and a second segment connecting the new point to the right point. The segment previously connecting the left to the right exiting points may be automatically delete. The user 14 may also move the points 208. For example, the user may touch on an existing point 208 and then drag the touched point into any desired location within the two axes 202, 204. Once the user lets go of the touched point, the curve 206 may be redrawn again.

The user 14 may also delete an existing point 208. For example, touching and holding on an existing point may bring up a message box asking for confirmation of deletion of the exiting point. If the user confirms the deletion, the GUI 200 may then remove the point and redraw the curve 206. Once the curve 206 is defined, the user 14 may press on a save icon 210 to save the curve 206, for example, into digital storage. The curve 206 may also be shared, for example, when the digital storage is provided in the form of a universal serial bus (USB) drive. The USB drive may then be inserted into another curing system 10 to load the curve 206 into memory 20.

The GUI 200 also includes a load icon 212 that may be pressed to bring up a set of folders for navigation. The user 14 may then navigate the folders to retrieve an existing curve and load the curve for customization via the GUI 200. A zoom icon 214 is provided. The user 14 may press on the zoom icon 214 and the GUI 200 may then zoom into a center section of the curve 206. Similarly, a unzoom (i.e., zoom out) icon 216 is also provided. The unzoom icon 216 may, when pressed, cause the GUI 200 to unzoom the curve 206. A range zoom/unzoom icon 218 is also shown. The user 14 may select a region (e.g., rectangular region) of the screen and then either zoom in or zoom out of the selected region via the icons 214 and 216 respectively. An icon 220 may be used to retrieve certain messages, e.g., warnings, and an icon 222 may be used to return to a "home" screen. It is to be noted that the GUI 200 may also be used with a joystick, a mouse, a keyboard, and other input devices. It is also to be noted that the measurements for the axes 202 and 204 may be configurable. For example, the user 14 may enter a time length for the curve 206. Likewise, the user 14 may enter a maximum temperature to use and the axis 204 may redraw itself accordingly.

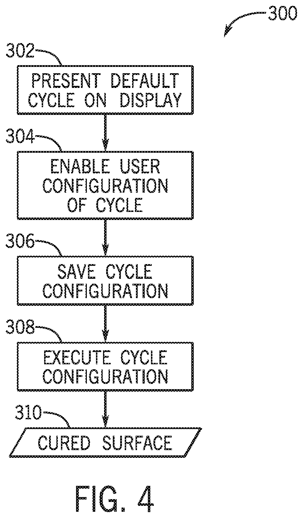

FIG. 4 is a flowchart of an embodiment of a process 300 that may be suitable for creating custom baking cycles. The process 300 may be implemented as computer code or instructions stored in the memory 20 and executable via the processor(s) 22. In the depicted embodiment, the process 300 may first present (block 302) a default bake cycle on the touchscreen display 18. For example, the bake cycle 100 may be displayed via the GUI 200.

The process 300 may then enable (block 304) the user 14 to configure the displayed bake cycle. For example, the GUI 200 may be used, (e.g., icons 210, 212, 214, 216, 218, 220, 222) as well as user input to create, move, and/or delete a set of the points 208. The user may also define the time for the bake cycle (e.g., via updating the time axis 202), as well as desired temperatures. The user 14 may define the bake cycle to include one, two, three, four or more ramps (e.g., slopes between plateaus), setpoints, and so on. For example, the user may decide that for clearcoat on top of metal the bake cycle should be a two-ramp bake cycle. Indeed, customization may include any type of bake cycle curve achievable via points 208, including ramped curves, or curves with geometric shapes.

The process 300 may then save (block 306) the new or customized bake cycle. For example, the icon 210 may be pressed and the user 14 may then navigate through a series of folders to save the new or customized bake cycle. The process 300 may then execute (block 308) the new or customized bake cycle configuration. For example, the user 14 may position the infrared emitters 12 into a desired position near the vehicle(s) to cure the desired surface. The new or customized bake cycle may then be executed. That control system 16 may thus control the infrared emitters 12 to deliver the desired radiation at the desired temperatures and times. By enabling for *in situ* (e.g., field) customization of bake cycles, the techniques described herein may deliver a cured product with specific customizations for substrate types, coating types (e.g., paint), ambient locations, and the like. It is also to be noted that the customization may occur during baking. That is, as the infrared emitters 12 follow a bake cycle at time T, temperatures at times T + 1 may be adjusted by adjusting the points 208 so that a dynamic bake may result.
This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A curing system (10), comprising:
a display (18) comprising a touchscreen;
a first radiation emitter lamp (12); and
a control system (16) operatively coupled the first radiation emitter lamp (12);
wherein the control system comprises a processor (22) configured to:
present, on the display (18), a first bake cycle (100), the first bake cycle comprising a curve (206) having at least two points (208);
receive, via the touchscreen of the display (18), user input to adjust the at least two points (208) by moving the points within a graph to create a second bake cycle (100); and
emit radiation via the first radiation emitter lamp (12) by following the second bake cycle (100).

2. The system (10) of claim 1, wherein the control system (16) comprises a memory (20) configured to store the first bake cycle and the second bake cycle.

3. The system (10) of claim 1, wherein the processor (22) is configured to receive a "press and hold" user input via the touchscreen (18) and to create a new point (208) included in the curve based on the "press and hold" user input.

4. The system (10) of claim 3, wherein the processor (22) is configured to determine if the new point lies between a first point and a second point of the at least two points and to delete a segment connecting the first point to the second point if the new point lies between the first point and the second point.

5. The system (10) of claim 1, wherein the processor (22) is configured to receive a second user input to enter a time length, a maximum temperature, or a combination thereof, used to display the curve (206), to redraw the curve as a redrawn curve based on the second input, and to display the redrawn curve after receiving the second user input.

6. The system (10) of claim 1, wherein the processor (22) is configured to redraw the curve (206) as a redrawn curve and to display the redrawn curve after receiving the user input.

7. The system (10) of claim 1, wherein the curve (206) comprises a first ramping portion (102) that ramps up a baking temperature and a plateau portion (104) following the first ramping portion (102) that maintains the baking temperature.

8. The system (10) of claim 7, wherein the curve comprises a second ramping portion (106) that ramps up the baking temperature following the plateau portion (104).

9. A method for controlling a curing system of any of claims 1-8 (300), comprising:
presenting (302), on a display (18) included in said curing system (10), a first bake cycle (100), the bake cycle comprising a curve (206) having at least two points (208);
receiving (304), via a touchscreen of the display (18), user input to adjust the at least two points (208) by moving the points within a graph to create a second bake cycle (100); and
emitting (308) radiation via a first radiation emitter lamp (12) included in the curing system (10) by following the second bake cycle (100).

10. The method (300) of claim 9, comprising receiving a "press and hold" user input via the touchscreen and creating a new point (208) included in the curve (206) based on the "press and hold" user input.

11. The method (300) of claim 10, comprising determining if the new point (208) lies between a first point and a second point of the at least two points and deleting a segment connecting the first point to the second point if the new point lies between the first point and the second point.

12. The method (300) of claim 9, comprising receiving a second user input to enter a time length, a maximum temperature, or a combination thereof, used to display the curve (206), redrawing the curve as a redrawn curve based on the second input, and displaying the redrawn curve after receiving the second user input.

13. The method (300) of claim 9, wherein the curve (206) comprises a first ramping portion (102) that ramps up a baking temperature and a plateau portion (104) following the first ramping portion (102) that maintains the baking temperature.

14. The method of claim 13, wherein the curve (206) comprises a second ramping portion (106) that ramps up the baking temperature following the plateau portion (104).

15. A tangible, non-transitory, computer-readable medium comprising instructions that when executed by a processor comprised in the system of any of claims 1-8 cause the processor to perform the method of any one of claims 9 to 14.

## Patentansprüche

1. Aushärtungssystem (10), umfassend:
eine Anzeige (18), die einen Berührungsbildschirm umfasst;
eine erste Strahlungsemitterlampe (12); und
ein Steuersystem (16), das betriebsfähig mit der ersten Strahlungsemitterlampe (12) koppelt ist; wobei das Steuersystem einen Prozessor (22) umfasst, der für Folgendes konfiguriert ist:
Darstellen, auf der Anzeige (18), eines ersten Backzyklus (100), wobei der erste Backzyklus eine Kurve (206) umfasst, die mindestens zwei Punkte (208) aufweist;
Empfangen, mittels des Berührungsbildschirms der Anzeige (18), einer Benutzereingabe, um die mindestens zwei Punkte (208) anzupassen, indem die Punkte innerhalb eines Graphen verschoben werden, um einen zweiten Backzyklus (100) zu erstellen; und
Emittieren von Strahlung mittels der zweiten Strahlungsemitterlampe (12), indem der zweite Backzyklus (100) befolgt wird.

2. System (10) nach Anspruch 1, wobei das Steuersystem (16) einen Speicher (20) umfasst, der dazu konfiguriert ist, den ersten Backzyklus und den zweiten Backzyklus zu speichern.

3. System (10) nach Anspruch 1, wobei der Prozessor (22) dazu konfiguriert ist, eine "Drücken und Halten"-Benutzereingabe mittels des Berührungsbildschirms (18) zu empfangen und einen neuen Punkt (208), der in der Kurve beinhaltet ist, basierend auf der "Drücken und Halten"-Benutzereingabe zu erstellen.

4. System (10) nach Anspruch 3, wobei der Prozessor (22) dazu konfiguriert ist, zu bestimmen, ob der neue Punkt zwischen einem ersten Punkt und einem zweiten Punkt der mindestens zwei Punkte liegt, und ein Segment zu löschen, das den ersten Punkt mit dem zweiten Punkt verbindet, wenn der neue Punkt zwischen dem ersten Punkt und dem zweiten Punkt liegt.

5. System (10) nach Anspruch 1, wobei der Prozessor (22) dazu konfiguriert ist, eine zweite Benutzereingabe zu empfangen, um eine Zeitdauer, eine maximale Temperatur oder eine Kombination davon einzugeben, die zum Anzeigen der Kurve (206) verwendet wird, um die Kurve als neu gezeichnete Kurve basierend auf der zweiten Eingabe neu zu zeichnen und die neu gezeichnete Kurve nach Empfang der zweiten Benutzereingabe anzuzeigen.

6. System (10) nach Anspruch 1, wobei der Prozessor (22) dazu konfiguriert ist, die Kurve (206) als eine neu gezeichnete Kurve neu zu zeichnen und die neu gezeichnete Kurve nach Empfang der Benutzereingabe anzuzeigen.

7. System (10) nach Anspruch 1, wobei die Kurve (206) einen ersten Anstiegsabschnitt (102), der eine Backtemperatur erhöht, und dem ersten Anstiegsabschnitt (102) folgend einen Plateauabschnitt (104), der die Backtemperatur aufrechterhält, umfasst.

8. System (10) nach Anspruch 7, wobei die Kurve einen zweiten Anstiegsabschnitt (106) umfasst, der die Backtemperatur dem Plateauabschnitt (104) folgend erhöht.

9. Verfahren zum Steuern eines Aushärtungssystems nach einem der Ansprüche 1-8 (300), umfassend:
Darstellen (302), auf einer Anzeige (18), die in dem Aushärtungssystem (10) beinhaltet ist, eines ersten Backzyklus (100), wobei der Backzyklus eine Kurve (206) umfasst, die mindestens zwei Punkte (208) aufweist;
Empfangen (304), mittels eines Berührungsbildschirms der Anzeige (18), einer Benutzereingabe, um die mindestens zwei Punkte (208) anzupassen, indem die Punkte innerhalb eines Graphen verschoben werden, um einen zweiten Backzyklus (100) zu erstellen; und
Emittieren (308) von Strahlung mittels einer ersten Strahlungsemitterlampe (12), die im Aushärtungssystem (10) beinhaltet ist, indem der zweite Backzyklus (100) befolgt wird.

10. Verfahren (300) nach Anspruch 9, umfassend Empfangen einer "Drücken und Halten"-Benutzereingabe mittels des Berührungsbildschirms und Erstellen eines neuen Punkts (208), der in der Kurve (206) beinhaltet ist, basierend auf der "Drücken und Halten"-Benutzereingabe.

11. Verfahren (300) nach Anspruch 10, umfassend Bestimmen, ob der neue Punkt (208) zwischen einem ersten Punkt und einem zweiten Punkt der mindestens zwei Punkte liegt, und Löschen eines Segments, das den ersten Punkt mit dem zweiten Punkt verbindet, wenn der neue Punkt zwischen dem ersten Punkt und dem zweiten Punkt liegt.

12. Verfahren (300) nach Anspruch 9, umfassend Empfangen einer zweiten Benutzereingabe zum Eingeben einer Zeitdauer, einer maximalen Temperatur oder einer Kombination davon, die zum Anzeigen der Kurve (206) verwendet wird, Neuzeichnen der Kurve als eine neu gezeichnete Kurve basierend auf der zweiten Eingabe und Anzeigen der neu gezeichneten Kurve nach Empfang der zweiten Benutzereingabe.

13. Verfahren (300) nach Anspruch 9, wobei die Kurve (206) einen ersten Anstiegsabschnitt (102), der eine Backtemperatur erhöht, und dem ersten Anstiegsabschnitt (102) folgend einen Plateauabschnitt (104), der die Backtemperatur aufrechterhält, umfasst.

14. Verfahren nach Anspruch 13, wobei die Kurve (206) einen zweiten Anstiegsabschnitt (106) umfasst, der die Backtemperatur dem Plateauabschnitt (104) folgend erhöht.

15. Greifbares, nichttransitorisches, computerlesbares Medium, umfassend Anweisungen, die, wenn sie von einem Prozessor ausgeführt werden, der in dem System nach einem der Ansprüche 1-8 umfasst ist, den Prozessor veranlassen, das Verfahren nach einem der Ansprüche 9 bis 14 durchzuführen.

## Revendications

1. Système de durcissement (10) comprenant :
un dispositif d'affichage (18) comprenant un écran tactile ;
une première lampe émettrice de rayonnement (12) ; et
un système de commande (16) couplé de manière fonctionnelle à la première lampe émettrice de rayonnement (12) ; dans lequel le système de commande comprend un processeur (22) configuré pour :
présenter, sur le dispositif d'affichage (18), un premier cycle de cuisson (100), le premier cycle de cuisson comprenant une courbe (206) présentant au moins deux points (208) ;
recevoir, par le biais de l'écran tactile du dispositif d'affichage (18), une entrée d'utilisateur pour ajuster les au moins deux points (208) en déplaçant les points dans un graphique pour créer un second cycle de cuisson (100) ; et
émettre un rayonnement par le biais de la première lampe émettrice de rayonnement (12) en suivant le second cycle de cuisson (100).

2. Système (10) selon la revendication 1, dans lequel le système de commande (16) comprend une mémoire (20) configurée pour stocker le premier cycle de cuisson et le second cycle de cuisson.

3. Système (10) selon la revendication 1, dans lequel le processeur (22) est configuré pour recevoir une entrée d'utilisateur « appuyer et maintenir » par le biais de l'écran tactile (18) et pour créer un nouveau point (208) inclus dans la courbe sur la base de l'entrée d'utilisateur « appuyez et maintenez ».

4. Système (10) selon la revendication 3, dans lequel le processeur (22) est configuré pour déterminer si le nouveau point se situe entre un premier point et un second point des au moins deux points et pour supprimer un segment reliant le premier point au second point si le nouveau point se situe entre le premier point et le second point.

5. Système (10) selon la revendication 1, dans lequel le processeur (22) est configuré pour recevoir une seconde entrée d'utilisateur pour entrer une durée, une température maximale, ou une combinaison de celles-ci, utilisées pour afficher la courbe (206), pour redessiner la courbe sous la forme d'une courbe redessinée sur la base de la seconde entrée, et pour afficher la courbe redessinée après avoir reçu la seconde entrée d'utilisateur.

6. Système (10) selon la revendication 1, dans lequel le processeur (22) est configuré pour redessiner la courbe (206) sous la forme d'une courbe redessinée et pour afficher la courbe redessinée après avoir reçu l'entrée d'utilisateur.

7. Système (10) selon la revendication 1, dans lequel la courbe (206) comprend une première partie en rampe (102) qui augmente une température de cuisson et une partie en plateau (104) après la première partie en rampe (102) qui maintient la température de cuisson.

8. Système (10) selon la revendication 7, dans lequel la courbe comprend une seconde partie en rampe (106) qui augmente la température de cuisson après la partie de plateau (104).

9. Procédé pour commander un système de durcissement selon l'une quelconque des revendications 1-8 (300), comprenant :
la présentation (302), sur un dispositif d'affichage (18) inclus dans ledit système de durcissement (10), d'un premier cycle de cuisson (100), le cycle de cuisson comprenant une courbe (206) présentant au moins deux points (208) ;
la réception (304), par le biais d'un écran tactile du dispositif d'affichage (18), d'une entrée d'utilisateur pour ajuster les au moins deux points (208) en déplaçant les points dans un graphique pour créer un second cycle de cuisson (100) ; et
l'émission (308) d'un rayonnement par le biais d'une première lampe émettrice de rayonnement (12) incluse dans le système de durcissement (10) en suivant le second cycle de cuisson (100).

10. Procédé (300) selon la revendication 9, comprenant la réception d'une entrée d'utilisateur « appuyer et maintenir » par le biais de l'écran tactile et la création d'un nouveau point (208) inclus dans la courbe (206) sur la base de l'entrée d'utilisateur « appuyer et maintenir ».

11. Procédé (300) selon la revendication 10, comprenant la détermination pour savoir si le nouveau point (208) se situe entre un premier point et un second point des au moins deux points et la suppression d'un segment reliant le premier point au second point si le nouveau point se trouve entre le premier point et le second point.

12. Procédé (300) selon la revendication 9, comprenant la réception d'une seconde entrée d'utilisateur pour entrer une durée, une température maximale, ou une combinaison de celles-ci, utilisées pour afficher la courbe (206), le redessin de la courbe sous la forme d'une courbe redessinée sur la base de la seconde entrée et l'affichage de la courbe redessinée après avoir reçu la seconde entrée d'utilisateur.

13. Procédé (300) selon la revendication 9, dans lequel la courbe (206) comprend une première partie en rampe (102) qui augmente une température de cuisson et une partie en plateau (104) après la première partie en rampe (102) qui maintient la température de cuisson.

14. Procédé selon la revendication 13, dans lequel la courbe (206) comprend une seconde partie en rampe (106) qui augmente la température de cuisson après la partie en plateau (104).

15. Support non transitoire tangible lisible par ordinateur comprenant des instructions qui, lorsqu'elles sont exécutées sur un processeur compris dans le système selon l'une quelconque des revendications 1-8, amènent le processeur à réaliser le procédé selon l'une quelconque des revendications 9 à 14.
